# EUROPÄISCHE PATENTSCHRIFT

(11) **EP 0 838 620 B1**
(45) Veröffentlichungstag und Bekanntmachung des Hinweises auf die Patenterteilung: **16.02.2000**
(21) Anmeldenummer: 96117252.5
(22) Anmeldetag: 28.10.1996
(51) Int. Cl.: F16K 31/10, F16K 31/06

(54) **Flussregelventil**
Flow control valve
Soupape de réglage du débit

(43) Veröffentlichungstag der Anmeldung: 29.04.1998
(73) Patentinhaber: A. Kayser Automotive Systems GmbH, 37574 Einbeck (DE)
(72) Erfinder: Schulte, Franz, 59557 Lippstadt (DE)
(74) Vertreter: Müller-Boré & Partner Patentanwälte

(56) Entgegenhaltungen:
- FR-A- 1 328 882
- FR-A- 2 163 246
- FR-A- 2 347 599
- US-A- 1 603 005
- US-A- 3 143 131
- US-A- 4 196 751
- US-A- 4 252 296

## Beschreibung

Die Erfindung betrifft ein Flußregelventil für Unterdruck, welches ein mindestens zweiteiliges Gehäuse mit einer Zufluß- und einer Abflußöffnung, einen Ventilsitz und ein mit dem Plattenanker eines Elektromagneten gekoppeltes Verschlußstück aufweist.

Durch die FR 2 347 599 A ist ein Flußregelventil bekannt, bei dem das Verschlußstück mittels eines Relais mit Plattenanker betätigt wird. Bei diesem Flußregelventil ist der Verstellweg des Verschlußstückes gleich dem Verstellweg des Plattenankers. Das bedeutet, daß bei einer die Verschlußsicherheit des Ventils gewährleistenden Verschlußkraft und bei einem großen Verstellweg des Verschlußstückes ein leistungsstarker und damit großer Elektromagnet verwendet werden muß.

Aufgabe der Erfindung ist es, ein gattungsgemäßes Regelventil so abzuändern, daß bei einem vorgegebenen Elektromagneten die größte Magnetkraft genutzt wird, und zwar bei einem ausreichend großen Verstellweg des Verschlußstückes. Diese Aufgabe wird erfindungsgemäß von einem Flußregelventil gelöst, welches folgende Merkmale aufweist:
- das Gehäuse ist durch eine Membrane in zwei Kammern aufgeteilt;
- die erste Kammer weist die Abflußöffnung und die zweite Kammer die Zuflußöffnung auf;
- die beiden Kammern sind durch eine Restriktionsöffnung miteinander verbunden;
- in der Abflußöffnung ist der Ventilsitz angeordnet;
- das Verschlußstück ist mit dem Zentrum der Membrane fest verbunden;
- in die zweite Kammer ist der Elektromagnet eingesetzt;
- der Plattenanker greift über ein den Verstellweg des Plattenankers übersetzendes Hebelsystem im Zentrum der Membrane an.

Bei einer bevorzugten Ausführungsform der Erfindung ist als Hebel ein einarmiger Hebel verwendet. Dieser erspart gegenüber einem zweiarmigen Hebel ein umständliches Umlenksystem, da ein einarmiger Hebel Kraft und Weg in dieselbe Wirkrichtung über- bzw. untersetzt.

Weiterhin ist das erfindungsgemäße Flußregelventil so ausgestaltet, daß der Hebel sich mit seinem einen Endabschnitt auf einer ortsfesten Kante des die zweite Kammer bildenden Gehäuseteils abstützt und mit dem anderen Endabschnitt in eine im Zentralbereich der Membrane angeordnete erste Zugöse eingreift.

Weiterhin ist es vorteilhaft, wenn der Plattenanker als Klappanker ausgebildet ist, der mit einer Stirnkante an einem seitlich an die Magnetspule angrenzenden ortsfesten Bauteil scharnier- oder schneidenartig schwenkbar gelagert ist und mit einer dem Lager gegenüberliegenden zweiten Zugöse zentral an der Membrane angreift, wobei die Höhenposition des Lagers so gewählt ist, daß die Unterseite des Klappankers in diesem Bereich dieselbe Höhenlage hat, wie die Stirnseite des Magnetkerns. Bei einer solchen Ausführungsform ist der Spalt zwischen dem Plattenanker und dem Magnetkern besonders klein und somit die Magnetkraft besonders groß und der Plattenanker selbst wirkt noch als ein den Verstellweg im Bereich des Magnetkerns übersetzender Hebel.

Weitere vorteilhafte Ausgestaltungen des erfindungsgemäßen Flußregelventils sind aus den Unteransprüchen 5 bis 11 zu entnehmen. In den Unteransprüchen 12 und 13 ist eine weitere Ausführungsform des erfindungsgemäßen Flußregelventils beansprucht.

Das erfindungsgemäße Flußregelventil eignet sich in besonders vorteilhafter Weise zur Verwendung als Regelventil bei dem Kraftstoff-Dampf-Rückhalte-System bei Kraftfahrzeugen. Dieses System basiert auf der kontrollierten Adsorptions-Desorptions-Reihenfolge in einem Aktiv-Kohle-Festbettadsorber. Diese Einrichtung sorgt dafür, daß Kohlenwasserstoffdämpfe nicht in die Atmosphäre abgegeben werden, sondern von der Aktiv-Kohle adsorbiert werden. Während der Fahrt mit dem Kraftfahrzeug durchströmt ein Teilstrom der frischen Verbrennungsluft den Adsorber in umgekehrter Richtung und desorbiert die vorher aufgenommenen Kohlenwasserstoffdämpfe. Dieser Teilstrom wird nur bei Motorbelastung durch den Adsorber geleitet, so daß keine Zunahme der Auspuffemission erfolgt.

Bei den bekannten hierfür verwendeten Regelventilen wird die Taktzeit und damit die Durchflußmenge vom Motormanagment und von der Stärke des Unterdrucks bestimmt. Gewünscht ist jedoch eine vom Unterdruck unabhängige Taktzeit, um insbesondere im Leerlauf des Motors, bei dem der größte Unterdruck entsteht, durch die zusätzliche Zufuhr von Kohlenwasserstoffdämpfen keine Drehzahlerhöhungen zu bekommen. Dieses wird durch das erfindungsgemäße Regelventil erreicht.

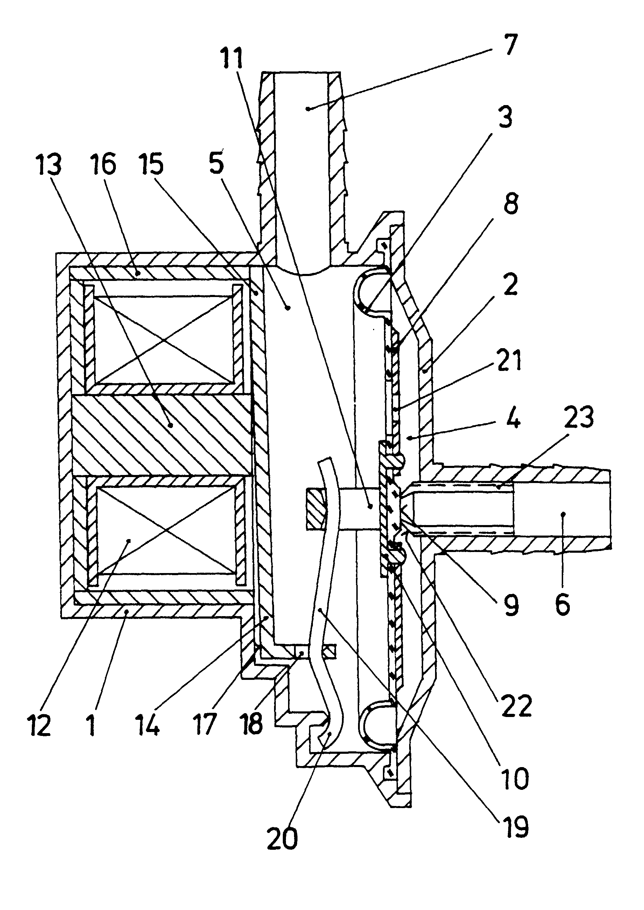

Die Zeichnung veranschaulicht ein besonders vorteilhaftes Ausführungsbeispiel der Erfindung.

Das Durchflußregelventil weist ein zweiteiliges Gehäuse (1, 2) auf, welches von einer mit ihrem äußeren Rand zwischen die Gehäuseteile (1, 2) eingespannten Membrane (3) in eine erste Kammer (4) und eine zweite Kammer (5) aufgeteilt ist. Die beiden Gehäuseteile (1, 2) bestehen aus einem Kunststoffmaterial. Die Gehäusekammer (4) weist eine mit dem Unterdruckerzeuger in Verbindung stehende Abflußöffnung (6) und die Kammer (5) eine Zuflußöffnung (7) auf. Auf die flußseitige Fläche der Membrane (3) ist eine kreisringförmige Verstärkungsplatte (8) konzentrisch aufgebracht, welche die Membrane (3) bis auf eine äußere Kreisringfläche versteift. Dadurch wird verhindert, daß die Membrane (3) bei ihrer Durchbiegung eine bombierte Form einnimmt.

Die Membrane (3) weist in ihrem Zentrum eine Verdickung auf, die die zentrale Öffnung der Versteifungsplatte (8) durchsetzt und daß Verschlußstück (9) bildet. Auf der der Versteifungsplatte (8) gegenüberliegenden Seite der Membrane (3) ist eine Platte (10) auf der Membranfläche aufliegend aufgesetzt und unter Einklemmung der Membrane (3) mit der Versteifungsplatte (8) verbunden. An diese Platte (10) ist eine erste Zugöse (11) angeformt. Die erste Kammer (4) und die zweite Kammer (5) sind durch eine Restriktionsöffnung (21) miteinander verbunden. Die Restriktionsöffnung (21) ist sowohl in die Versteifungsplatte (8) als auch in die Membrane (3) eingebracht, wobei die Öffnung in der Versteifungsplatte (8) die Größe der Restriktionsöffnung (21) bestimmt. Das Verschlußstück (9) arbeitet mit dem Ventilsitz (22) zusammen, der von der Stirnfläche einer in die Abflußöffnung (6) eingesetzten und mittels Gewinde in ihrer Axialrichtung verstellbaren Buchse (23) gebildet wird.

Auf den Boden des Gehäuseteils (1) ist eine Elektromagnetspule (12) aufgesetzt, die den Magnetkern (13) umgibt. Zwischen der Seitenwandung des Gehäuseteils (1) und der elektromagnetischen Spule (12) ist ein von der elektromagnetischen Spule (12) magnetisierbares Joch (16) eingesetzt. Der Magnetanker ist ein Plattenanker (14), welcher als Klappanker ausgebildet ist. Dieser Klappanker ist mit der Seitenkante (15) auf dem Joch (16) scharnier- oder schneidenartig schwenkbar gelagert. Dabei ist die Höhenlage des Lagers so gewählt, daß die Unterseite (17) des Klappankers im angezogenen Zustand, das heißt bei geöffnetem Ventil, auf der Stirnseite des Magnetkerns (13) zumindest fast aufliegt. Bei geschlossenem Ventil ist der Spalt zwischen der Unterseite (17) des Klappankers und dem Elektromagneten keilförmig und sehr schmal, insbesondere im Bereich des Magnetkerns (13). Das bedeutet, daß die Magnetkraft des Elektromagneten bereits zu Beginn seiner Wirkkraft sehr groß ist. Auf der dem Lager des Klappankers gegenüberliegenden Seite weist letzterer eine zweite Zugöse (18) auf. Durch die erste Zugöse (11) und die zweite Zugöse (18) ist ein Hebel (19) hindurchgesteckt, der sich mit dem Ende (20) auf dem Gehäuseteil (1) schneidenartig und verschwenkbar abstützt.

Die Wirkungsweise dieses Flußregelventils ist wie folgt:

Sobald der Unterdruckerzeuger arbeitet entsteht in der Abflußöffnung (6) ein Unterdruck. Das Verschlußstück (9) wird gegen den Ventilsitz (22) gesogen. Bei Betätigung des Elektromagneten wird der Plattenanker (14) angezogen und öffnet das Ventil durch abheben des Verschlußstückes (9) vom Ventilsitz (22). Dabei wird der Verstellweg in der Mitte des Plattenankers (14) durch den Plattenanker selbst bereits übersetzt. Eine weitere Übersetzung erfolgt durch den einarmigen Hebel (19). Bei geöffnetem Ventil wird Luft oder ein Gas durch die Zuflußöffnung (7) angesaugt. Diese Luft oder dieses Gas gelangt in die Kammer (5) und durch die Restriktionsöffnung (21) in die Kammer (4). Dabei entsteht in der Kammer (4) gegenüber der Kammer (5) ein Unterdruck. Wird der Elektromagnet abgeschaltet, so wird durch den Unterdruck in der Kammer (4) das Verschlußstück (9) gegen den Ventilsitz (22) gezogen.

Will man die Kennlinie des Ventils derart verändern, daß sich der Schnittpunkt mit der Durchflußachse im Koordinatensystem ändert, kann man dieses erreichen, durch Verstellen des Ventilsitzes (22), das heißt durch Veränderung des Luftspaltes zwischen Ventilsitz (22) und Verschlußstück (9). Diese Veränderung erfolgt durch Verdrehen der Buchse (23), die mittels Gewinde in der Abflußöffnung (6) gelagert ist.

## Patentansprüche

1. Flußregelventil für Unterdruck, welches ein mindestens zweiteiliges Gehäuse mit einer Zufluß- und einer Abflußöffnung, einen Ventilsitz und ein mit dem Plattenanker eines Elektromagneten gekoppeltes Verschlußstück aufweist, gekennzeichnet durch folgende Merkmale:
- das Gehäuse (1, 2) ist durch eine Membrane (3) in zwei Kammern (4, 5) aufgeteilt;
- die erste Kammer (4) weist die Abflußöffnung (6) und die zweite Kammer (5) die Zuflußöffnung (7) auf;
- die beiden Kammern (4, 5) sind durch eine Restriktionsöffnung (21) miteinander verbunden;
- in der Abflußöffnung (6) ist der Ventilsitz (22) angeordnet;
- das Verschlußstück (9) ist mit dem Zentrum der Membrane (3) fest verbunden;
- in die zweite Kammer (5) ist der Elektromagnet eingesetzt;
- der Plattenanker (14) greift über ein den Verstellweg des Plattenankers (14) übersetzendes Hebelsystem im Zentrum der Membrane (3) an.

2. Flußregelventil nach Anspruch 1, dadurch gekennzeichnet, daß in Hebelsystem ein einarmiger Hebel (19) verwendet wird.

3. Flußregelventil nach Anspruch 2, dadurch gekennzeichnet, daß der Hebel (19) sich mit seinem einen Endabschnitt (20) auf einer ortfesten Kante des die zweite Kammer (5) bildenden Gehäuseteils (1) abstützt und mit dem anderen Endabschnitt in eine im Zentralbereich der Membrane (3) angeordneten ersten Zugöse (11) eingreift.

4. Flußregelventil nach Anspruch 3, dadurch gekennzeichnet, daß der Plattenanker (14) als Klappanker ausgebildet ist, der mit einer Seitenkante (15) an einem seitlich an die Magnetspule (12) angrenzenden ortsfesten Bauteil (16) scharnier- oder schneidenartig schwenkbar gelagert ist und mit einer dem Lager gegenüberliegenden zweiten Zugöse (18) zentral an der Membrane (3) angreift, wobei die Höhenposition des Lagers so gewählt ist, daß die Unterseite (17) des Klappankers bei betätigtem Elektromagnet dieselbe Höhenlage hat, wie die Stirnseite des Magnetkerns (13).

5. Flußregelventil nach einem der vorstehenden Ansprüche, dadurch gekennzeichnet, daß die Membrane (3) eine sandwichartig aufgebrachte Versteifungsplatte (8) aufweist.

6. Flußregelventil nach Anspruch 5, dadurch gekennzeichnet, daß die Versteifungsplatte (8) kreisringförmig ausgebildet ist.

7. Flußregelventil nach Anspruch 6, dadurch gekennzeichnet, daß die Membrane (3) im Zentralbereich eine die zentrale Öffnung der Versteifungsplatte (8) durchsetzende Verdickung aufweist, die das Verschlußstück (9) bildet.

8. Flußregelventil nach einem der vorstehenden Ansprüche, dadurch gekennzeichnet, daß die erste Zugöse (11) an einer Platte (10) angeformt ist, die mit der Versteifungsplatte (8) der Membrane (3) verbunden ist und die Membrane (3) zwischen der Platte (10) und der Versteifungsplatte (8) eingeklemmt ist.

9. Flußregelventil nach einem der vorstehenden Ansprüche, dadurch gekennzeichnet, daß die Restriktionsöffnung (21) sowohl in die Membrane (3) als auch in die Versteifungsplatte (8) der Membrane eingebracht ist und der Durchmesser der Öffnung in der Versteifungsplatte (8) die Größe der Restriktionsöffnung bestimmt.

10. Flußregelventil nach einem der vorstehenden Ansprüche, daß die Membrane (3) mit ihrem Außenrand zwischen den beiden Gehäuseteilen (1, 2) eingespannt ist.

11. Flußregelventil nach einem der vorstehenden Ansprüche, dadurch gekennzeichnet, daß der Ventilsitz (22) von einer der Stirnflächen einer in die Abflußöffnung (6) eingesetzten, mittels Gewinde in ihrer Axialrichtung verstellbaren Buchse (23) gebildet wird.

12. Flußregelventil nach Anspruch 1 oder 2, dadurch gekennzeichnet, daß an die im Zentralbereich der Membrane (3) angeordnete Platte (10) der Hebel (19) einstückig angeformt ist.

13. Flußregelventil nach einem der vorstehenden Ansprüche, dadurch gekennzeichnet, daß die im Zentralbereich der Membrane (3) angeordnete Platte einen die Membrane (3) im Zentrum durchsetzenden Ansatz aufweist, in dessen Stirnfläche eine als Verschlußstück (9) wirkende hochelastische Dichtung eingesetzt ist.

14. Flußregelventil nach einem der vorstehenden Ansprüche, dadurch gekennzeichnet, daß es als Regelventil bei dem Kraftstoff-Dampf-Rückhalte-System bei Kraftfahrzeugen verwendet wird.

## Claims

1. Flow control valve for a vacuum, which has an at least two-part housing with an inflow and an outflow opening, a valve seat and a closure piece coupled to the plate armature of an electromagnet, characterized by the following features:
- the housing (1, 2) is divided into two chambers (4, 5) by a diaphragm (3);
- the first chamber (4) has the outflow opening (6) and the second chamber (5) has the inflow opening (7);
- the two chambers (4, 5) are connected to one another by a restriction opening (21);
- the valve seat (22) is arranged in the outflow opening (6);
- the closure piece (9) is firmly connected to the centre of the diaphragm (3);
- the electromagnetic is inserted into the second chamber (5);
- the plate armature (14) engages at the centre of the diaphragm (3) via a lever system which converts the displacement of the plate armature (14).

2. Flow control valve according to Claim 1, characterized in that a single-armed lever (19) is used in the lever system.

3. Flow control valve according to Claim 2, characterized in that the lever (19) is supported by one of its end portions (20) on a fixed edge of the housing part (1) forming the second chamber (5) and engages with the other end portion in a first pulling lug (11) arranged in a central area of the diaphragm (3).

4. Flow control valve according to Claim 3, characterized in that the plate armature (14) is designed as a flap armature which is pivotably mounted in a hinge-or blade-like manner by its lateral edge (15) on a fixed component (16) laterally adjoining the magnet coil (12) and engages centrally on the diaphragm (3) by means of a second pulling lug (18) situated opposite the bearing, the vertical position of the bearing being chosen so that the underside (17) of the flap armature is in the same vertical position as the end of the magnet core (13) when the electromagnet is actuated.

5. Flow control valve according to one of the preceding claims, characterized in that the diaphragm (3) has a reinforcing plate (8) applied in a sandwichlike manner.

6. Flow control valve according to Claim 5, characterized in that the reinforcing plate (8) is of annular design.

7. Flow control valve according to Claim 6, characterized in that, in the central area, the diaphragm (3) has a thickened portion which passes through the central opening in the reinforcing plate (8) and forms the closure piece (9).

8. Flow control valve according to one of the preceding claims, characterized in that the first pulling lug (11) is formed on a plate (10) which is connected to the reinforcing plate (8) of the diaphragm (3), and the diaphragm (3) is clamped between the plate (10) and the reinforcing plate (8).

9. Flow control valve according to one of the preceding claims, characterized in that the restriction opening (21) is made both in the diaphragm (3) and in the reinforcing plate (8) of the diaphragm and the diameter of the opening in the reinforcing plate (8) determines the size of the restriction opening.

10. Flow control valve according to one of the preceding claims, characterized in that the diaphragm (3) is clamped by its outer edge between the two housing parts (1, 2).

11. Flow control valve according to one of the preceding claims, characterized in that the valve seat (22) is formed by one of the end faces of a bush (23) which is inserted into the outflow opening (6) and can be adjusted in its axial direction by means of a thread.

12. Flow control valve according to Claim 1 or 2, characterized in that the lever (19) is formed integrally on the plate (10) of the lever (19), the said plate being arranged in the central area of the diaphragm (3).

13. Flow control valve according to one of the preceding claims, characterized in that the plate arranged in the central area of the diaphragm (3) has a projection which passes through the diaphragm (3) at the centre and into the front face of which a highly resilient seal acting as a closure piece (9) is inserted.

14. Flow control valve according to one of the preceding claims, characterized in that it is used as a control valve in a fuel-vapour retention system in motor vehicles.

## Revendications

1. Soupape de réglage de débit pour vide partiel, qui comporte une cage, au moins en deux parties et ayant un orifice d'admission et un orifice d'émission, un siège de soupape et un obturateur couplé à l'armature à plaque d'un électro-aimant, caractérisée en ce que :
- la cage (1, 2) est divisée en deux chambres (4, 5) par une membrane (3) ;
- la première chambre (4) comporte l'orifice d'émission (6) et la deuxième chambre (5) comporte l'orifice d'admission (7) ;
- les deux chambres (4, 5) sont reliées par un orifice de restriction (21) ;
- le siège de soupape (22) est agencé dans l'orifice d'émission (6) ;
- l'obturateur (9) est relié, fixe, au centre de la membrane (3) ;
- l'électro-aimant est placé dans la deuxième chambre (5) ;
- l'armature à plaque (14) agit dans le centre de la membrane (3) par l'intermédiaire d'un système à levier passant par-dessus le moyen de réglage de l'armature à plaque (14).

2. Soupape de réglage de débit selon la revendication 1, caractérisée en ce qu'un levier (19) à bras unique est utilisé dans le système à levier.

3. Soupape de réglage de débit selon la revendication 2, caractérisée en ce que le levier (19) s'appuie avec une première extrémité (20) sur une arête fixe de la partie de cage (1) formant la deuxième chambre (5) et pénètre avec l'autre extrémité dans un premier anneau de traction (11) agencé dans la zone centrale de la membrane (3) .

4. Soupape de réglage de débit selon la revendication 3, caractérisée en ce que l'armature à plaque (14) est conçue comme une armature battante qui est logée avec une arête latérale (15) sur une pièce fixe (16) latéralement adjacente à la bobine d'électro-aimant (12) de manière à pouvoir pivoter comme une charnière ou une cisaille et qui agit centrée sur la membrane (3) avec un deuxième anneau de traction (18) opposé au logement, la position en hauteur du logement étant choisie de telle sorte que, lorsque l'électro-aimant est actionné, le dessous (17) de l'armature battante a la même position en hauteur que le côté frontal du noyau d'électro-aimant (13).

5. Soupape de réglage de débit selon l'une des revendications précédentes, caractérisée en ce que la membrane (3) comporte une plaque de renfort (8) appliquée dessus en sandwich.

6. Soupape de réglage de débit selon la revendication 5, caractérisée en ce que la plaque de renfort (8) est conçue en forme d'anneau de cercle.

7. Soupape de réglage de débit selon la revendication 6, caractérisée en ce que la membrane (3) comporte dans la zone centrale un épaississement qui traverse l'orifice central de la plaque de renfort (8) et qui forme l'obturateur (9).

8. Soupape de réglage de débit selon l'une des revendications précédentes, caractérisée en ce que le premier anneau de traction (11) est formé sur une plaque (10) qui est reliée à la plaque de renfort (8) de la membrane (3) et en ce que la membrane (3) est coincée entre la plaque (10) et la plaque de renfort (8).

9. Soupape de réglage de débit selon l'une des revendications précédentes, caractérisée en ce que l'orifice de restriction (21) est agencé aussi bien dans la membrane (3) que dans la plaque de renfort (8) de la membrane et en ce que le diamètre de l'orifice dans la plaque de renfort (8) détermine la taille de l'orifice de restriction.

10. Soupape de réglage de débit selon l'une des revendications précédentes, caractérisée en ce que la membrane (3) est encastrée avec son bord extérieur entre les deux parties de cage (1, 2).

11. Soupape de réglage de débit selon l'une des revendications précédentes, caractérisée en ce que le siège de soupape (22) est formé par l'une des surfaces frontales d'une douille (23) placée dans l'orifice d'émission (6) et réglable dans sa direction axiale au moyen de filetages.

12. Soupape de réglage de débit selon la revendication 1 ou 2, caractérisée en ce que le levier (19) est formé d'une seule pièce sur la plaque (10) agencée dans la zone centrale de la membrane (3).

13. Soupape de réglage de débit selon l'une des revendications précédentes, caractérisée en ce que la plaque agencée dans la zone centrale de la membrane (3) comporte un bout qui traverse au centre la membrane (3) et dans la surface frontale duquel est placé un joint très élastique agissant comme obturateur (9).

14. Soupape de réglage de débit selon l'une des revendications précédentes, caractérisée en ce qu'elle est utilisée comme soupape de réglage dans le système de retenue de vapeur de carburant dans des véhicules automobiles.
